# EUROPEAN PATENT APPLICATION

(11) **EP 3 395 140 A1**
(43) Date of publication of application: **31.10.2018**
(21) Application number: 18162768.8
(22) Date of filing: 20.03.2018
(51) Int. Cl.: A01B 69/04, B62D 55/07, G05D 1/02

(54) **AUTONOMOUS TRACTOR**

(30) Priority: 21.03.2017 IT 201700031156
(71) Applicant: Longo, Luigi, 87100 Cosenza (IT); Quintieri, Fausto, 87100 Cosenza (IT); Abbati, Enrico, 10121 Torino (IT)
(72) Inventor: Longo, Luigi, 87100 Cosenza (IT); Quintieri, Fausto, 87100 Cosenza (IT); Abbati, Enrico, 10121 Torino (IT)
(74) Representative: Tagliafico, Giulia

(57) **Abstract**

An agricultural machine is herein described, which is able to independently run different types of work on agricultural fields or be remotely controlled, through a special remote control by an operator, to perform more complex operations. It is therefore described an agricultural tractor that is able to carry out work on open or woody agricultural fields, in complete autonomy and therefore without the driving position.

## Description

### FILED OF THE INVENTION

The present invention relates to a farm tractor, which is able to carry out in total autonomy various processes on agricultural fields, both on open and woody fields.

### BACKGROUND OF THE INVENTION

Even to date tractors are essential for carrying out various functions in an agricultural field, being able to hook and operate various types of specific equipment for agriculture, to perform different types of processing or to drag trailers. These widely used agricultural machines, essentially consist of a frame, supported by two front wheels and two rear wheels, said frame being shaped to house all the mechanical parts and the operator's driving position.

Generally, the tractors are equipped with a heat engine, cooled by a radiator, placed in the front part of the frame, to which a motor shaft is connected that, through a clutch, transfers the motion to a primary shaft connected to a gear change system. The latter is directly associated with a differential which, by means of two semi-axles, transfers the motion to the rear wheels and, through a joint, also to the front differential. The latter, in turn, transfers the motion to the front wheels. The engine, moreover, generally, moves, through an additional transmission shaft, also the power take off that drives the various tools to which the farm tractor can engage. To this basic mechanics, almost unvaried through the years, the technological progress has added an electronic component to facilitate the work of the operator.

It is however known that said traditional agricultural tractors are not without drawbacks, among which, for example, the construction complexity of the machine, the safety of the operator and the vertical encumbrance of the driving position, due to the presence of systems that ensure the safety in case of overturning. The necessity to eliminate said drawbacks is therefore perceived, in order to render the tractor capable of performing works in the agricultural field in complete autonomy and in safety for the operator.

WO 2009/141465 mentions a vehicle, not equipped with a driving position, which can move autonomously among the rows of crops in a greenhouse to perform several tasks. The vehicle is equipped with a frame designed to receive several tools, in addition to an attachment point on the back for the coupling of machines and appliances. Said vehicle includes an electronically controlled hydrostatic transmission system, which enables to move the device in a continuous range of speed so that it can be adapted to the needs, in addition to providing energy to the tools that require it. The vehicle is moved by means of the dynamic balancing of each of the tracks, which form the rolling system. Said vehicle comprises moreover a sensor system consisting of pressure sensors, incremental encoders and radar. The sensor system of the vehicle comprises ultrasonic sensors distributed over the whole perimeter of the same (obstacle detection), a magnetic compass (vehicle orientation) and safety sensors (collision prevention). The information provided by the sensor system allow the localization of the vehicle and navigation in the work environment. Moreover, the vehicle is equipped with a multispectral camera for the continuous monitoring of particular cultures parameters, such as: detection of phytosanitary and nutritional problems, control of the plant mass growth, localization of fruits, determination of the ripeness of the fruit.

EP 2858471 refers to an autonomous agricultural vehicle for plowing fields (i.e. a plow), in which the vehicle is self-propelled and fully automatic to allow it to work unattended on the ground and for long periods of time.

### SUMMARY OF THE INVENTION

The purpose of the present invention is born from the necessity to develop an farm machine, which can perform autonomously different types of work on agricultural fields and/or being remotely-controlled, through a special remote control (for example a *touchscreen* type) by an operator, to perform more complex operations. Said machine is hereinafter referred to as "tractor", since it serves as a complete substitute, in the routine processing of agricultural fields, of the current traditional tractors. For this purpose, the machine is equipped with a similar power and a power take off with a standard three-point hitch, which allows its use with the agricultural tools used today.

The automatism, whose process will be described below, is obtained with the assistance of a GPS tracer, outside the machine, a series of sensors and a GPS module, inside the machine, managed by a command card. The complementary work of the afore mentioned components guarantees, for example, a perfect run between the rows of the field.

These purposes are achieved by the present agricultural machine with hydraulic drive. It is essentially composed by a frame, supported by two track units, shaped to house a heat engine, the components of the oleodynamic system and the electronic components capable to handle the automation of the machine. Said automation (which will be better described below) allows to use the machine itself, not only in open fields (cereals, etc.), but also in woody agricultural fields (orchards, olive groves, etc.).

The choice to adopt a hydraulic system for the operating the entire autonomous tractor, comes not only from the fact that the management by the control card of the oleodynamic components is much more simple and effective, but also for reasons of encumbrance of the components. The adoption of said hydraulic system for an agricultural tractor allows, in fact, to deprive the machine of cumbersome mechanical components, such as for example the gear change system, the differentials and the various transmission shafts, so as to reduce the size and, at the same time, increase constructive simplicity, while maintaining a high overall power. Moreover, during the design phase it was evidenced that, thanks to the absence of the components above mentioned and to the lesser encumbrance of the machine, it is possible to give an external shape to the tractor so as to make as little damage as possible to the foliage of the trees that surround the rows of woody agricultural fields.

### DISCUSSION OF THE FIGURES

All the characteristics and advantages of the invention herein described will be more evident from the disclosure of a preferred, but not exclusive, embodiment of the autonomous tractor, with particular reference to the attached Figures.

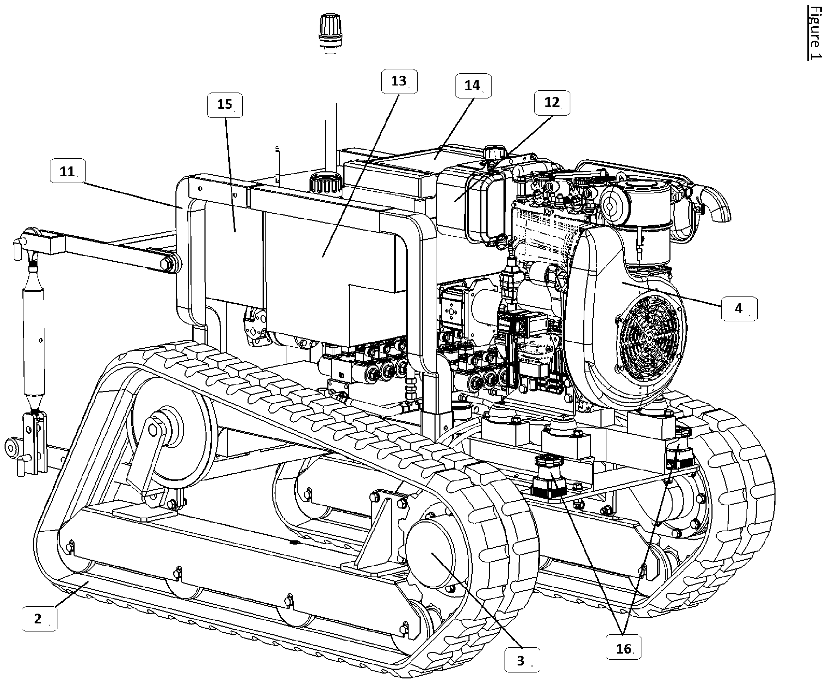

Figure 1 represents an isometric view of the autonomous tractor. From the representation of Figure 1 the two track units (2) operated by a hydraulic gear motor (3) are evident. A heat engine (4) placed on the front part of the frame, is also noted. An upper sub-frame (11), instead, houses the fuel tank (12), the oil tank (13), a radiator (14) for cooling the oil and the engine refrigerating liquid, a box (15) containing the electronic components of the autonomous tractor, and a series of laser sensors (LIDAR) (16)

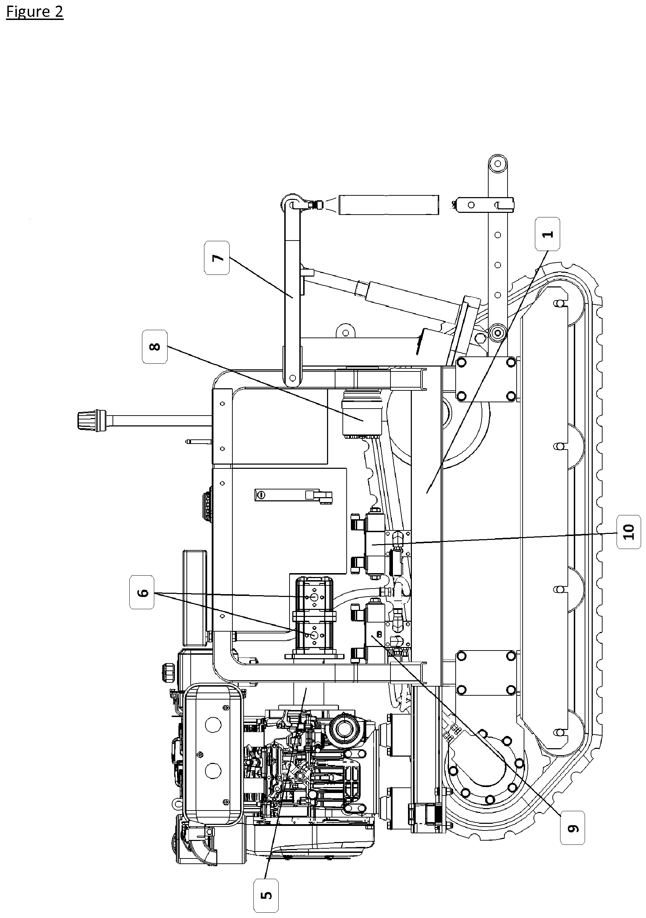

Figure 2 shows the left side view of the autonomous tractor with the left track unit in transparency. From the representation of Figure 2 a frame (1) is evident supported by the two track units (2, Figure 1). Through a transmission bell (5), the engine (4, Figure 1) directly feeds two hydraulic pumps (6), which in their turn, feed the oleodynamic system of the autonomous agricultural machine. The tractor, moreover, includes a power take-off (7), of the "three-point hitch" type, also powered by a dedicated hydraulic motor (8). In the specific embodiment shown in the Figures, by way of example, a first valve group (9) is shown, proportional and electronically controlled, for starting the gear motors (3, Figure 1) of the track assemblies (2, Figure 1) that allow the tractor to advance. A second group of valves (10), also proportional and electronically controlled, controls the hydraulic motor (8) of the power take-off and the pistons of the "three-point hitch" system (7)

### DESCRIPTION OF THE INVENTION

With reference to the Figures, the autonomous tractor comprises a frame (1) supported by two track units (2) operated by a hydraulic gear motor (3). The tractor also includes a heat engine (4), preferably placed in the front part of the frame (11). The engine (4) powers two hydraulic pumps (6), preferably by means of a transmission bell (5), which, in turn, feed the hydraulic system of the autonomous agricultural machine.

The tractor, moreover, includes a power take-off (7), preferably with a "three-point hitch", also fuelled by a dedicated hydraulic engine (8). In the specific embodiment shown in the Figures, by way of example, a first valve group (9) is shown, preferably of the proportional type and electronically controlled, for driving the gear motors (3) of the track units (2) that will allow the tractor to advance. Second group of valves (10), preferably also proportional and electronically controlled, controls the hydraulic motor (8) of the power take-off and the pistons of the "three-point hitch" system (7). Both the valve groups (9), (10) are preferably equipped with safety systems such as, for example, maximum pressure valves. An upper sub-frame (11), on the contrary, lodges the fuel tank (12), the oil tank (12), a radiator (14), for cooling the oil and the engine refrigerating liquid, a box (15) containing the electronic components of the autonomous tractor and a series of sensors (LIDAR) (16). Specifically, inside the latter, the command card (more detailed description will follow), the GPS module inside the machine with relevant antenna, the wireless module, with relevant antenna, the primary battery for powering the system and an auxiliary battery, which will guarantee a constant power supply to the control card, even when the primary battery is completely exhausted.

The automation of the tractor is therefore entrusted, as already said, to a series of laser sensors (LIDAR - Laser Imaging Detection and Ranging) (16), placed, preferably by means of a special plate, before the engine (4), to a command card and to a GPS tracer outside the car. The command card, in particular, comprises a microcontroller (co-processor), which operates the motion software, a processor, with the function to interface with a remote control and transmit data of the selections performed by an operator to the microcontroller, and a memory card. All these electronic components, for safety reasons, as already said, are contained in a sealed box (15), to avoid damages caused by external agents.

The tractor of the invention, therefore, is devoid of the driving position.

The automatic machining process, which the tractor object of the invention is able to accomplish, is described in detail below.

In order to guarantee an effective automation and simple to "program" by a technical operator, a simple GPS tracer was conceived capable of registering at regular and short intervals, its own coordinates using a "precise" tracking system, for example of the type currently used in precision farming. In fact, when it is necessary to create a path for the autonomous tractor, it is sufficient to apply said tracer, for example, on a traditional tractor or on any other vehicle capable to pass between the rows of the field. Said tracer, once switched on, will record the path taken, until it is switched off. The next step is to transfer, for example, trough a wireless connection (without wire), the data of the tracer to the processor, in the command card, which, in turn, transfers them to the microcontroller, when they are retrieved from the selection, which can occur through the remote control, by the technical operator. All the machine data are saved in the memory card present in the command card of the machine.

The motion and processing phases are handled by the microcontroller, which, through digital connections, can handle singularly the oleodynamic valves, these being all with proportional electronic control. The microcontroller, moreover, is capable to handle the power delivered by the heat engine and necessary to feed the hydraulic pumps and to singularly control the valves that power the gear motors of the tracks and the power take-off

In practice, the autonomous tractor has a functioning comparable to that of a numerically controlled machine. In particular, the machine can be assimilated to a pantograph working on a X-Y plane, where said plane, in reality, is the field in which the tractor moves according to values previously assigned by GPS tracer.

It is therefore possible through a dedicated module present in the command card, to follow the GPS points previously registered and transferred in the machine by the external GPS tracer and to handle the collision risks through the LIDAR sensors, so as to drive the tractor without problems along a given path. In the event of mobile or immobile obstacles, not present during tracing and insurmountable for the machine, the autonomous tractor will stop without colliding with the latter.

To summarize, the autonomous tractor will retrace exactly the previously recorded track, for example, from a traditional tractor. This process was studied not only to eliminate all the possible variables which can generate a non perfect path of the agricultural or fields, but also to extend the field of action of the autonomous tractor to the agricultural fields of any kind, typically delimited by rows of trees, having an irregular structure, typical to every cultivation, both in the form and in the division of crops.

Another important advantage of said process consists in an easier and immediate "programming" of the autonomous tractor by the technical operator, thank to the fact that the mapping process of the fields takes place, for example, through a traditional tractor that, typically, is more controllable and manageable by an agricultural professional.

Another object of the invention is a kit comprising the autonomous tractor as mentioned before and a GPS tracer external to the tractor and/or a remote control.

The word "kit" is here intended to refer to a set of devices, which, in this case, includes the tractor object of the invention and other auxiliary devices, which are external to the tractor, but are useful for its functioning.

Another object of the invention is a method for the use of the tractor as described before or of the kit as described before, comprising a mapping phase of the agricultural area, on which it is intended to have the tractor operating, through the GPS tracer external to the tractor. Preferably such method comprises a phase for setting up of a new working path by an external operator through the transmission of the data collected by the GPS tracer external to the tractor to the memory card of the tractor.

The autonomous tractor, described above according to a preferred embodiment of the invention, may be subject to numerous modifications without departing from the scope of the inventive concept to which the patent refers.

These modifications can relate to components, replaceable with other technically equivalent ones, as well as materials, shapes and contingent sizes, that can be used, without thereby departing from the scope of protection of the following claims.

## Claims

1. An autonomous tractor comprising:
- a frame (1) supported by two track units (2) operated by a hydraulic gear motor (3),
- a heat engine (4), which powers two hydraulic pumps (6), which, in turn, power the oleodynamic system of the tractor;
- a power take off (7) fuelled by a dedicated hydraulic engine (8);
- a first group of valves (9) for activating the gear motors (3) of the track units (2), which enable the advancement of the tractor;
- a second group of valves (10) that controls the hydraulic engine (8) of the power take off;
- a series of laser sensors (LIDAR) (16);
- an upper sub-frame (11), which houses the fuel tank (12), the oil tank (13), a radiator (14) for cooling the oil and the engine refrigerating liquid, and a box (15) containing the electronic components of the autonomous tractor; wherein, in the box (15), there are a command card, a GPS module, inside the tractor, with the relevant antenna, a wireless module, with the relevant antenna, a primary battery for powering the system and an auxiliary battery,
- wherein the command card comprises a microcontroller (or co-processor), which manages a motion software, a processor, with the function to interface with a remote control and transmit the parameters of the selections, performed by an operator, to the microcontroller and a memory card,
said tractor being devoid of a driving position.

2. The tractor according to claim 1, wherein the heat engine (4) powers the two hydraulic pumps (6) through a transmission bell (5).

3. The tractor according to one or more of the preceding claims, in which the power take off (7) is equipped with a three-point hitch.

4. The tractor according to one or more of the preceding claims, in which the first group of valves (9) and/or the second group of valves (10) are of the electronically controlled proportional type.

5. A kit comprising an autonomous tractor according to one of more of the preceding claims and a GPS tracer external to the tractor.

6. The kit according to claim 5, comprising a remote control.

7. Method for the use of the tractor according to one or more of the claims from 1 to 4, or of the kit according to one or more of the claims from 5 to 6, comprising a mapping phase of the agricultural area, on which it is intended to have the tractor operating, through the GPS tracer external to the tractor.

8. Method for the use of the tractor according to one or more of the claims from 1 to 4, or of the kit according to one or more of the claims from 5 to 6, comprising a phase for setting up of a new working path by an external operator through the transmission of the data collected by the GPS tracer external to the tractor to the memory card of the tractor.
